# EUROPÄISCHE PATENTSCHRIFT

(11) **EP 1 858 953 B1**
(45) Veröffentlichungstag und Bekanntmachung des Hinweises auf die Patenterteilung: **16.07.2008**
(21) Anmeldenummer: 06701733.5
(22) Anmeldetag: 25.01.2006
(51) Int. Cl.: C08G 65/26, C08G 6/02, C09D 17/00

(54) **ZUSAMMENSETZUNGEN ZUR HERSTELLUNG VON UNIVERSALPIGMENTPRÄPARATIONEN**
COMPOSITIONS FOR PRODUCING UNIVERSAL PIGMENT PREPARATIONS
COMPOSITIONS SERVANT A PRODUIRE DES PREPARATIONS PIGMENTAIRES UNIVERSELLES

(30) Priorität: 17.03.2005 DE 102005012315
(43) Veröffentlichungstag der Anmeldung: 28.11.2007
(73) Patentinhaber: Evonik Degussa GmbH, 40474 Düsseldorf (DE)
(72) Erfinder: WENNING, Andreas, 48301 Nottuln (DE); LOEST, Dietmar, 48249 Dülmen (DE)
(86) Internationale Anmeldenummer: PCT/EP2006/050436
(87) Internationale Veröffentlichungsnummer: WO 2006/097378

(56) Entgegenhaltungen:
- EP-A- 0 378 048
- EP-A- 1 078 946
- EP-A- 1 529 821
- DE-A1- 4 404 809

## Beschreibung

Die Erfindung betrifft neue Zusammensetzungen mit guten Bindemittel-, Netz- und Dispergiereigenschaften für praktisch schaumfreie wässrige als auch lösemittelhaltige und lösemittelfreie Pigmentpräparationen.

Für die Dispergierung von Füllstoffen und Pigmenten in flüssigen Medien bedient man sich in der Regel Dispergiermitteln, um so die für eine effektive Dispergierung der Feststoffe benötigten mechanischen Scherkräfte zu reduzieren und gleichzeitig möglichst hohe Füllgrade zu realisieren. Die Dispergiermittel unterstützen das Aufbrechen von Agglomeraten, benetzen und/oder belegen als oberflächenaktive Verbindungen die Oberfläche der zu dispergierenden Partikel und stabilisieren diese gegen eine unerwünschte Reagglomeration.

Netz- und Dispergiermittel erleichtern bei der Herstellung von Farben und Lacken die Einarbeitung von Pigmenten und Füllstoffen, die als wichtige Formulierungsbestandteile das optische Erscheinungsbild und die physikalisch-chemischen Eigenschaften von Beschichtungen wesentlich bestimmen. Für eine optimale Ausnutzung müssen diese Feststoffe zum einen gleichmäßig in Lacken und Farben verteilt werden, zum anderen muss die einmal erreichte Verteilung stabilisiert werden. Die stabilisierende Komponente wird in vielen Fällen auch von Bindemittelkomponenten wahrgenommen. Derartige Bindemittel sind auch deshalb wertvolle Komponenten für Beschichtungsstoffe, weil sie zu einer schnelleren Trocknung und zur Erhöhung der Härte der resultierenden Filme beitragen.

Wichtig für eine Anwendung in Universalpigmentpräparationen ist erstens eine universelle Verträglichkeit mit anderen Bindemitteln - wie z. B. mit den bedeutenden Langölalkydharzen, Pflanzenölen, Kohlenwasserstoffharzen, Acrylatharzen und Polyamiden - zweitens und eine universelle Löslichkeit in organischen Lösemitteln, wie z. B. in den aus ökologischen und toxikologischen Gründen häufig eingesetzten Reinaliphaten und Testbenzinen. Solche in Pigmentpräparationen verwendbare Bindemittel mit universeller Verträglichkeit und Löslichkeit werden z. B. in der DE 44 04 809 beschrieben.

Als Dispergiermittel für Universalpigmentpräparationen werden insbesondere Alkylphenolethoxylate oder Fettalkoholalkoxylate eingesetzt, die zu einer sterischen Stabilisierung erreichter Pigmentverteilungen beitragen. Die sehr leistungsfähigen Alkylphenolethoxylate sind aus ökotoxikologischen Gründen in die Kritik geraten. Ihr Einsatz in Wasch- und Reinigungsmitteln ist in vielen Ländern bereits verboten. Für die Lack- und Farbenindustrie ist ähnliches zu erwarten. Fettalkoholethoxylate erreichen in vielen Fällen nicht die guten pigmentbenetzenden Eigenschaften der Alkylphenolethoxylate, da es ihnen an adsorptionsfähigen Gruppen fehlt. Insbesondere der nicht adsorbierte Teil dieser Produktgruppe stabilisiert zudem in unerwünschter Weise den Schaum in wässrigen Pigmentpräparationen.

Blockcopolymere Polyalkylenoxide sind toxikologisch unbedenklich, stark adsorptionsfähig aber weniger schaumstabilisierend. Sie werden z. B. in der EP 1 078 946 beschrieben. Eine vollständige Niederschlagung der Schaumbildung können diese Produkte aber nicht erreichen. Daher müssen den wässrigen Pigmentpräparationen auch hier entschäumungsaktive Substanzen zugesetzt werden. Diese Substanzen haben jedoch andere negative Begleiterscheinungen wie unerwünschte Oberflächendefekte. Ein Einsatz vieler Dispergieradditive scheidet aus, da die Wasserfestigkeit oder die Lichtbeständigkeit von Beschichtungen negativ beeinflusst wird.

Der vorliegenden Erfindung lag daher die Aufgabe zugrunde, eine Zusammensetzung zu finden, die über gute Bindemitteleigenschaften einerseits und andererseits gleichzeitig über gute Netzeigenschaften und Dispergiereigenschaften verfügt.

Die der Erfindung zugrunde liegende Aufgabe konnte überraschenderweise durch den Einsatz einer Kombination von blockcopolymeren, styrenoxidhaltigen Polyalkylenoxiden und Keton-Aldehyd-Harzen, gelöst werden.

Überraschenderweise wurde gefunden, dass die Kombination von blockcopolymeren, styrenoxidhaltigen Polyalkylenoxiden mit Keton-Aldehyd-Harzen hervorragend geeignet ist als Dispergiermittel sowohl für lösemittelfreie, lösemittelhaltige als auch für wässrige Universalpigmentpräparationen.
Es wurde eine breite Verträglichkeit mit Bindemitteln und Löslichkeit in für Universalpigmentpräparationen verwendeten organischen Lösemitteln und Wasser gefunden. Außerdem wird die Schaumbildung in wässrigen Pigmentpräparationen sehr effizient unterdrückt. Die Eigenschaften von Beschichtungsstoffen, wie Antrocknung und Härte werden positiv beeinflusst, wenn diese die erfindungsgemäße Zusammensetzung enthalten. Es war bei Kenntnis des Standes der Technik nicht vorhersehbar, dass die Kombination der Einzelkomponenten zu der Zusammensetzung führt, welche über die genannte Summe der Eigenschaften verfügt.

Gegenstand der Erfindung sind Zusammensetzungen, im Wesentlichen enthaltend
A) 95 bis 5 Gew.-% mindestens eines blockcopolymeren, styrenoxidhaltigen Polyalkylenoxids,
   und
B) 5 bis 95 Gew.-% eines Keton-Aldehyd-Harzes,
   und
C) 0 bis 80 Gew.-% mindestens eines Lösemittels ,
wobei die Summe der Gewichtsangaben von Komponente A) bis C) 100 Gew.-% beträgt.

Da sowohl blockcopolymere, styrenoxidhaltige Polyalkylenoxide als auch Keton-Aldehyd-Harze in Wasser unlöslich sind, war es völlig überraschend, dass eine Kombination beider Verbindungen in Wasser löslich ist und einen Einsatz in wässrigen Pigmentpräparationen erlaubt.

Prinzipiell sind alle blockcopolymeren, styrenoxidhaltigen Polyalkylenoxide als Komponente A) geeignet.

Die in der Erfindung bevorzugt verwendeten blockcopolymeren, styrenoxidhaltigen Polyalkylenoxide A) werden z. B. in der EP 1 078 946 beschrieben. Sie besitzen die allgemeine Formel I:

R¹O(SO)ₐ(EO)_{b}(PO)_{c}(BO)_{d}R²,

wobei R¹ ein geradkettiger oder verzweigter oder cycloaliphatischer Rest mit 8 bis 13 Kohlenstoffatomen bedeutet,
R² = Wasserstoff, ein Acrylrest, Alkylrest oder Carbonsäurerest mit jeweils 1 bis 8 C-Atomen bedeutet,
SO = Stryrenoxid,
EO = Ethylenoxid,
PO = Propylenoxid,
BO = Butylenoxid und
a = 1 bis 1,9,
b = 3 bis 50,
c = 0 bis 3,
d = 0 bis 3
bedeutet,
wobei a, c oder d von 0 verschieden, und b >= a+c+d ist.

Prinzipiell sind alle Keton-Aldehyd-Harze als Komponente B) geeignet.

Die bevorzugten Keton-Aldehyd-Harze B), die in der DE 44 05 809 beschrieben werden, werden aus cycloaliphatischen Ketonen, Aldehyd und gegebenenfalls weiteren Monomeren hergestellt.

Dabei enthalten diese Keton-Aldehyd-Harze
I. 40 bis 100 Mol-%, bezogen auf alle eingesetzten Ketone, mindestens eines alkylsubstituierten Cyclohexanons mit einem oder mehreren Alkylresten mit 1 bis 8 Kohlenstoffatomen,
II. 0,8 bis 2,0 mol mindestens eines aliphatischen Aldehyds, bezogen auf 1 mol aller eingesetzten Ketone und
III. 0 bis 60 Mol-%, bezogen auf alle eingesetzten Ketone, weitere Ketone mit aliphatischen, cycloaliphatischen, aromatischen Kohlenwasserstoffresten, wobei diese gleich oder verschieden und wiederum mit den genannten Kohlenwasserstoffresten in der Kohlenwasserstoffkette substituiert sein können sowie gegebenenfalls Phenole und/oder Harnstoff oder seine Derivate, enthalten.

Besonders bevorzugte C₁- bis C₈-alkylsubstituierte Cyclohexanone sind 4-tert.-Butylcyclohexanon und 3,3,5-Trimethylcyclohexanon.

Das Mischungsverhältnis der erfindungsgemäß verwendeten blockcopolymeren, styrenoxidhaltigen Polyalkylenoxide und der Keton-Aldehyd-Harze ist 95:5 bis 5 : 95. Verwendet man in dieser Mischung mehr als 50 Gew.-% Keton-Aldehyd-Harz muss aus Viskositätsgründen ein Hilfslösemittel C) verwendet werden.

Als Komponente C) kommen Wasser und alle organischen Lösemittel in Betracht. Zu den organischen Lösemitteln zählen beispielsweise Alkohole, Ester, Ketone, Ether, Glycolether, aromatische Kohlenwasserstoffe, hydroaromatische Kohlenwasserstoffe, Halogenkohlenwasserstoffe, Terpenkohlenwasserstoffe, aliphatische Kohlenwasserstoffe, Esteralkohole, Dimethylformamid oder Dimethylsulfoxid.

Für lösemittelhaltige Pigmentpräparationen sind organische Lösemittel bevorzugt, die ökologisch und toxikologisch unbedenklich sind und die bis zu einem gewissen Grad mit Wasser verträglich bzw. mischbar sind.

Für wässrige Pigmentpräparationen wird die Mischung aus blockcopolymeren, styrenoxidhaltigen Polyalkylenoxiden A) und Keton-Aldehyd-Harzen B) vorzugsweise so gewählt, dass auf ein organisches Lösemittel als Komponente C) verzichtet werden kann.

Gegenstand der Erfindung ist auch ein Verfahren zur Herstellung der Zusammensetzungen, im Wesentlichen enthaltend
A) 95 bis 5 Gew.-% mindestens eines blockcopolymeren, styrenoxidhaltigen Polyalkylenoxids,
   und
B) 5 bis 95 Gew.-% eines Keton-Aldehyd-Harzes,
   und
C) 0 bis 80 Gew.-% mindestens eines Lösemittels ,
   wobei die Summe der Gewichtsangaben von Komponente A) bis C) 100 Gew.-% beträgt,
indem die Verbindungen A), B) und C) bei Temperaturen von 20 bis 100 °C in einem Rührkessel gemischt werden.

Die erfindungsgemäßen Zusammensetzungen werden in Universalpigmentpräparationen eingesetzt.

Die Zusammensetzung aus blockcopolymeren, styrenoxidhaltigen Polyalkylenoxiden und Keton-Aldehyd-Harzen kann bei der Verwendung entweder vorab mit den zu dispergierenden Pigmenten vermischt oder direkt in dem wässrigen oder lösemittelhaltigen Dispergiermedium vor oder gleichzeitig mit der Zugabe der Pigmente gelöst werden.

Als Pigmente können beispielsweise anorganische oder organische Pigmente sowie Ruße eingesetzt werden.

Als anorganische Pigmente seien exemplarisch genannt Titandioxide und Eisenoxide.

In Betracht zu ziehende organische Pigmente sind beispielsweise Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolo-, Naphthalintetracarbonsäure-, Perylen-, Isoamidolin(on)-, Flavanthron-, Pyranthron- oder Isoviolanthron-Reihe.

Als Ruße können Gasruße, Flammruße oder Furnaceruße eingesetzt werden. Diese Ruße können zusätzlich nachoxidiert und/oder verperlt sein.
Neben Pigmenten können auch Füllstoffe in dem für den Fachmann bekannten Mengen mitverwendet werden. Füllstoffe, die in wässrigen und/oder lösemittelhaltigen Lacken dispergiert werden können, sind beispielsweise solche auf Basis von Kaolin, Talkum, Glimmer, andere Silicate, Quarz, Christobalit, Wollastonit, Perlite, Diatomeenerde, Faserfüllstoffe, Aluminiumhydroxid, Bariumsulfat oder Calciumcarbonat.

Die erfindungsgemäßen Zusammensetzungen zeichnen sich durch eine sehr gute Adsorptionsfähigkeit an Pigmenten, eine exzellente Schaumzerstörung und eine niedrige Viskosität aus. Darüber hinaus werden die Trocknungsgeschwindigkeit, Wasser- und Chemikalienbeständigkeit sowie die Härte von Beschichtungen positiv beeinflusst.

Die folgenden Beispiele sollen die Erfindung weiter erläutern, aber nicht ihren Anwendungsbereich beschränken:

### Beispiele

### 1) Herstellung eines styrenoxidhaltigen Polyalkylenoxids (nicht erfindungsgemäß)

336,4 g (2,34 mol) Trimethylcyclohexanol und 16,3 g (0,23 mol) Kaliummethylat wurden in einen Reaktor gegeben. Nach sorgfältiger Spülung mit Reinstickstoff wurde auf 110 °C erhitzt, und es wurden 308,2 g (2,554 mol) Styrenoxid innerhalb einer Stunde zugegeben. Nach zwei weiteren Stunden war die Anlagerung des Styrenoxids beendet, erkennbar an einem Restgehalt an Styrenoxid, der laut Gaschromatogramm < 0,1 Gew.-% lag. Anschließend wurden 339,2 g (7,71 Mol) Ethylenoxid so schnell in den Reaktor dosiert, dass die Innentemperatur 120 °C und der Druck 6 bar nicht überschritt. Nach vollständiger Einleitung des Ethylenoxids wurde die Temperatur so lange auf 115 °C gehalten, bis ein konstanter Manometerdruck das Ende der Nachreaktion anzeigte. Schließlich wurden bei 80 bis 90 °C die nicht umgesetzten Restmonomere im Vakuum entfernt. Das erhaltene Produkt wurde mit Hilfe von Phosphorsäure neutralisiert und das Wasser durch Destillation, das entstandene Kaliumphosphat durch Filtration zusammen mit einem Filterhilfsmittel entfernt. Das Molekulargewicht aus der Bestimmung der Hydroxylzahl bei einer angenommenen Funktionalität von 1 betrug M = 467 g/mol.

### 2) Herstellung eines Keton-Aldehyd-Harzes (nicht erfindungsgemäß)

176,7 g 4-tert-Butylcyclohexanon, 481,7 g 3,3,5-Trimethylcyclohexanon, 112,4 g Cyclohexanon und 373,1 g einer 30 Gew.-%igen Formalinlösung wurden vorgelegt und auf 60 °C erhitzt. Danach wurden 114,5 g einer 50 Gew.-%igen Natriumhydroxidlösung innerhalb von 15 min zugetropft und auf 80 °C erhitzt. Im Anschluss wurde innerhalb von 90 min 200,0 g der Formalinlösung zugetropft und 4 Stunden unter Rückfluss bei 85 °C gehalten. Das entstandene Harz wurde nach Zugabe von Eisessig mit Wasser neutralgewaschen. Nach Destillation resultierte ein hellgelbes, sprödes Harze mit einem Erweichungspunkt von 85 °C.

### 3) Herstellung der erfindungsgemäßen Zusammensetzung

600 g des styrenoxidhaltigen Polyalkylenoxids aus Beispiel 1) und 400 g des Keton-Aldehyd-Harzes aus Beispiel 2) wurden unter Rühren bei 80 °C miteinander gemischt. Das Produkt war klar und hatte bei 23 °C eine Viskosität von 13446 mPa s.

### 4) Herstellung der erfindungsgemäßen Zusammensetzung mit Bindemittel- und Dispergiereigenschaften

500 g des styrenoxidhaltigen Polyalkylenoxids aus Beispiel 1) und 500 g des Keton-Aldehyd-Harzes aus Beispiel 2) wurden unter Rühren bei 80 °C miteinander gemischt. Das Produkt war klar und hatte bei 23 °C eine Viskosität von 88810 mPa s.

Zur Überprüfung der Wirksamkeit der erfindungsgemäßen Zusammensetzung als Dispergieradditive mit Bindemitteleigenschaften sowie der Vergleichsverbindungen wurde wie folgt vorgegangen:

### 5) Herstellung der Pigmentpräparationen

Dazu wurden die jeweiligen Additive mit Wasser und/oder organischem Lösemittel gemischt und danach die Pigmente zugegeben. Die Dispergierung erfolgte nach Zugabe von 2 mm Glasperlen 30 min bei 35 °C und 3000 U/min in einem Dispermaten. Die wässrigen Pigmentpräparationen wurden mit einer Mischung aus Dimethylaminoethanol und Wasser (1 : 1 Gew.-%) auf einen pH-Wert von ca. 9 eingestellt.

### 5A) Formulierung einer wässrigen, schwarzen Pigmentpräparation (erfindungsgemäß)

| | |
|---|---|
| 62,9 g | Wasser |
| 8,0 g | erfindungsgemäße Zusammensetzung aus Beispiel 3) |
| 20,0 g | Spezialschwarz 4 (Degussa AG) |

Diese schwarze Pigmentpräparation war leicht rührbar und schaumfrei.

### 5B) Formulierung einer wässrigen, schwarzen Pigmentpräparation (Vergleich)

| | |
|---|---|
| 70,9 g | Wasser |
| 8,0 g | nicht erfindungsgemäße Verbindung aus Beispiel 1) |
| 20,0 g | Spezialschwarz 4 (Degussa AG) |

Diese schwarze Pigmentpräparation war hochviskos und schäumte stark.

### 5C) Formulierung einer lösemittelhaltigen, schwarzen Pigmentpräparation (erfindungsgemäß)

| | |
|---|---|
| 75,0 g | Butylglykol |
| 25,0 g | erfindungsgemäße Zusammensetzung aus Beispiel 4) |
| 20,0 g | Spezialschwarz 4 (Degussa AG) |

Diese schwarze Pigmentpräpararion war niedrigviskos.

### 5D) Formulierung einer wässrigen, blauen Pigmentpräparation (erfindungsgemäß)

| | |
|---|---|
| 80,0 g | Wasser |
| 20,0 g | erfindungsgemäße Zusammensetzung aus Beispiel 3) |
| 48,0 g | Heliogenblau 6975F (BASF AG) |

Diese blaue Pigmentpräparation mit einer Viskosität von 58 mPa s war leicht rührbar und schaumfrei. Sie war auch nach Lagerung bei 50 °C von mehr als einer Woche unverändert stabil.

### 5E) Formulierung einer wässrigen, blauen Pigmentpräparation (Vergleich)

| | |
|---|---|
| 80,0 g | Wasser |
| 20,0 g | nicht erfindungsgemäße Verbindung aus Beispiel 1) |
| 48,0 g | Heliogenblau 6975F (BASF AG) |

Diese blaue Pigmentpräparation war hochviskos und schäumte stark.

### 6) Herstellung von Beschichtungsstoffen aus den Pigmentpräparationen

Zur Herstellung von Beschichtungsstoffen wurden die Pigmentpräparationen vorgelegt und die Auflackverbindungen portionsweise zugegeben.

### 6A) Herstellung von lösemittelfreien, schwarzen Beschichtungsstoffen

Die erfindungsgemäße und die nicht erfindungsgemäße Pigmentpräparation wurden mit einer wässrigen Polyurethan-Dispersion aufgelackt.

| | erfindungsgemäß | Vergleich |
|---|---|---|
| Schwarzpigmentpräparation | 8,4 g aus Beispiel 5A) | 8,4 g aus Beispiel 5B) |
| Alberdingk U 800 (Alberdingk Boley GmbH) | 63,0 g | 63,0 g |
| Trocknung: 1 h bei 60 °C, Aufzug auf Glasplatte mit 100 µm Ziehrahmen | | |
| Glanz 20° | 74 | 74 |
| Glanz 60° | 84 | 84 |
| Hazegloss | 20 | 18 |
| Pendelhärte | 86 | 87 |

### 6B) Herstellung von lösemittelhaltigen und lösemittelarmen, schwarzen Beschichtungsstoffen

Die erfindungsgemäße lösemittelhaltige Schwarzpigmentpräparation wurde sowohl lösemittelhaltig als auch wässrig aufgelackt.

| Schwarzpigmentpräparation | 6,8 g aus Beispiel 5C) | 7,0 g aus Beispiel 5C) |
|---|---|---|
| Degalan 706 (Röhm GmbH) | 50,0 g | 63,0 g |
| Dynapol HW 112-56 (Degussa AG) | - | 55,5 g |
| Cymel 325 (Cytech) | - | 3,7 g |
| Demineralisiertes Wasser | - | 10,0 g |
| Tego 7442, 10 % in Wasser (Tego Chemie Service GmbH) | - | 0,8 g |
| Aufzug auf Glasplatte mit 100 µm Ziehrahmen | Trocknung: 24 h bei 25 °C | Trocknung: 20 min bei 140 °C |
| Glanz 20° | 73 | 92 |
| Glanz 60° | 84 | 98 |
| Hazegloss | 26 | 70 - 76 |
| Pendelhärte | 141 | 175 |

### 7) Herstellung abgetönter Farben

Zur Herstellung abgetönter Lacke wurde die blaue Pigmentpräparation mit einem Weißlack gemischt.

Der Weißlack bestand aus 70,69 g Alberdingk U 800 (Alberdingk Boley GmbH), 28,24 g Kronos 2310 (Kronos Titan GmbH) und 0,07 g Aerosil 200 (Degussa AG).

| | erfindungsgemäß | Vergleich |
|---|---|---|
| Weißlack | 99,0 g | 99,0 g |
| Blaupigmentpräparation | 3,7 g aus Beispiel 5D) | 3,7 g aus Beispiel 5E) |
| Demineralisiertes Wasser | 6,5 g | 6,5 g |

Das Bindemittel-Weißpigment-Verhältnis betrug 1:1, das Verhältnis Blaupigment zu Weißlack 1 : 100.

Von den mit einem 100 µm Ziehrahmen aufgezogenen Abtönlacken wurde nach 2 min Trocknung der Rub-out-Test gemacht. Zudem wurde die Farbstärke ermittelt.

| | Farbstärke F | Delta E nach Rub-out |
|---|---|---|
| Erfindungsgemäß | 31 | 0,32 |
| Vergleich | 29 | 0,35 |

Der Abtönlack auf Basis der erfindungsgemäßen Zusammensetzung trocknete wesentlich schneller als der Vergleichsabtönlack.

Mit den erfindungsgemäßen Zusammensetzungen lassen sich sowohl lösemittelhaltige, lösemittelarme als auch lösemittelfreie Pigmentpräparationen und Beschichtungsstoffe herstellen. Die wässrigen Pigmentpräparationen sind im Unterschied zu den Vergleichsbeispielen niedrigviskos und praktisch schaumfrei.
Zudem wurden die Farbstärkeentwicklung und die Flockulationsbeständigkeit von Pigmentpräparationen sowie die Antrocknung von Beschichtungen positiv beeinflusst.

## Patentansprüche

1. Zusammensetzungen, im Wesentlichen enthaltend
A) 95 bis 5 Gew.-% mindestens eines blockcopolymeren, styrenoxidhaltigen Polyalkylenoxids,
und
B) 5 bis 95 Gew.-% eines Keton-Aldehyd-Harzes,
und
C) 0 bis 80 Gew.-% mindestens eines Lösemittels,
wobei die Summe der Gewichtsangaben von Komponente A) bis C) 100 Gew.-% beträgt.

2. Zusammensetzungen nach Anspruch 1,
**dadurch gekennzeichnet,**
**dass** die blockcopolymeren, styrenoxidhaltigen Polyalkylenoxide A) die allgemeine Formel I besitzen:
R¹O(SO)ₐ(EO)_{b}(PO)_{c}(BO)_{d}R²,
wobei R¹ ein geradkettiger oder verzweigter oder cycloaliphatischer Rest mit 8 bis 13 Kohlenstoffatomen bedeutet,
R² = Wasserstoff, ein Acrylrest, Alkylrest oder Carbonsäurerest mit jeweils 1 bis 8 C-Atomen bedeutet,
SO = Stryrenoxid,
EO = Ethylenoxid,
PO = Propylenoxid,
BO = Butylenoxid und
a = 1 bis 1,9,
b = 3 bis 50,
c = 0 bis 3,
d = 0 bis 3
bedeutet,
wobei a, c oder d von 0 verschieden und b >= a+c+d ist.

3. Zusammensetzungen nach mindestens einem der vorherigen Ansprüche,
**dadurch gekennzeichnet,**
**dass** die Keton-Aldehyd-Harze B)
I. 40 bis 100 Mol-%, bezogen auf alle eingesetzten Ketone, mindestens eines alkylsubstituierten Cyclohexanons mit einem oder mehreren Alkylresten mit 1 bis 8 Kohlenstoffatomen,
II. 0,8 bis 2,0 mol mindestens eines aliphatischen Aldehyds, bezogen auf 1 mol aller eingesetzten Ketone und
III. 0 bis 60 Mol-%, bezogen auf alle eingesetzten Ketone, weitere Ketone mit aliphatischen, cycloaliphatischen, aromatischen Kohlenwasserstoffresten, wobei diese gleich oder verschieden und wiederum mit den genannten Kohlenwasserstoffresten in der Kohlenwasserstoffkette substituiert sein können sowie gegebenenfalls Phenole und/oder Harnstoff oder seine Derivate, enthalten.

4. Zusammensetzungen nach mindestens einem der vorherigen Ansprüche,
**dadurch gekennzeichnet,**
**dass** das Mischungsverhältnis der blockcopolymeren, styrenoxidhaltigen Polyalkylenoxide A) und der Keton-Aldehyd-Harze B) 95 : 5 bis 5 : 95 beträgt.

5. Zusammensetzungen nach mindestens einem der vorherigen Ansprüche,
**dadurch gekennzeichnet,**
**dass** als Lösemittel C) Wasser enthalten ist.

6. Zusammensetzungen nach mindestens einem der vorherigen Ansprüche,
**dadurch gekennzeichnet,**
**dass** als Lösemittel C) ein organisches Lösemittel enthalten ist

7. Zusammensetzungen nach mindestens einem der vorherigen Ansprüche,
**dadurch gekennzeichnet,**
**dass** als Lösemittel C) mindestens ein Alkohol, Ester, Keton, Ether, Glycolether, aromatischer Kohlenwasserstoff, hydroaromatischer Kohlenwasserstoff, Halogenkohlenwasserstoff, Terpenkohlenwasserstoff, aliphatischer Kohlenwasserstoff, Esteralkohol, Dimethylformamid oder Dimethylsulfoxid, allein oder in Mischungen enthalten ist.

8. Verfahren zur Herstellung von Zusammensetzungen, im Wesentlichen enthaltend
A) 95 bis 5 Gew.-% mindestens eines blockcopolymeren, styrenoxidhaltigen Polyalkylenoxids,
und
B) 5 bis 95 Gew.-% eines Keton-Aldehyd-Harzes,
und
C) 0 bis 80 Gew.-% mindestens eines Lösemittels,
wobei die Summe der Gewichtsangaben von Komponente A) bis C) 100 Gew.-% beträgt,
indem die Verbindungen A), B) und C) bei Temperaturen von 20 bis 100 °C in einem Rührkessel gemischt werden.

## Claims

1. Composition essentially containing
A) 95% to 5% by weight of at least one block-copolymeric, styrene oxide-containing polyalkylene oxide,
and
B) 5% to 95% by weight of a ketone-aldehyde resin, and
C) 0 to 80% by weight of at least one solvent, the sum of the amounts by weight of components A) to C) being 100% by weight.

2. Composition according to Claim 1, **characterized in that** the block-copolymeric, styrene oxide-containing polyalkylene oxides A) possess the general formula I:
R¹O(SO)ₐ(EO)_{b}(PO)_{c}(BO)_{d}R²,
where R¹ is a straight-chain or branched or cycloaliphatic radical having 8 to 13 carbon atoms,
R² is hydrogen or an acryloyl radical, alkyl radical or carboxylic acid radical having in each case 1 to 8 carbon atoms,
SO = styrene oxide,
EO = ethylene oxide,
PO = propylene oxide,
BO = butylene oxide and
a = 1 to 1.9,
b = 3 to 50,
c = 0 to 3,
d = 0 to 3,
a, c or d being other than 0, and b >= a+c+d.

3. Composition according to at least one of the preceding claims, **characterized in that**
the ketone-aldehyde resins B) contain
I. 40 to 100 mol%, based on all ketones employed, of at least one alkyl-substituted cyclohexanone having one or more alkyl radicals having 1 to 8 carbon atoms,
II. 0.8 to 2.0 mol of at least one aliphatic aldehyde, based on 1 mol of all ketones employed, and
III. 0 to 60 mol%, based on all ketones employed, of further ketones having aliphatic, cycloaliphatic, aromatic hydrocarbon radicals, it being possible for these ketones to be identical or different and to be substituted in turn, in the hydrocarbon chain, by the stated hydrocarbon radicals, and also, if desired, phenols and/or urea or its derivatives.

4. Composition according to at least one of the preceding claims, **characterized in that**
the mixing ratio of the block-copolymeric, styrene oxide-containing polyalkylene oxides A) to the ketone-aldehyde resins B) is 95:5 to 5:95.

5. Composition according to at least one of the preceding claims,
**characterized in that** water is present as solvent C).

6. Composition according to at least one of the preceding claims, **characterized in that** an organic solvent is present as solvent C).

7. Composition according to at least one of the preceding claims, **characterized in that** at least one alcohol, ester, ketone, ether, glycol ether, aromatic hydrocarbon, hydroaromatic hydrocarbon, halogenated hydrocarbon, terpene hydrocarbon, aliphatic hydrocarbon, ester alcohol, dimethylformamide or dimethyl sulfoxide, alone or in a mixture, is present as solvent C).

8. Process for preparing a composition essentially containing
A) 95% to 5% by weight of at least one block-copolymeric, styrene oxide-containing polyalkylene oxide,
and
B) 5% to 95% by weight of a ketone-aldehyde resin,
and
C) 0 to 80% by weight of at least one solvent, the sum of the amounts by weight of components A) to C) being 100% by weight,
by mixing compounds A), B), and C), at temperatures from 20 to 100°C in a stirred vessel.

## Revendications

1. Compositions, contenant essentiellement
A) de 95 à 5 % en poids d'au moins un polyoxyalkylène copolymère séquencé, contenant de l'oxyde de styrène,
et
B) de 5 à 95 % en poids d'une résine cétone-aldéhyde,
et
C) de 0 à 80 % en poids d'au moins un solvant,
la somme des données pondérales des composants A) à C) étant égale à 100 % en poids.

2. Compositions selon la revendication 1, **caractérisées en ce que** les polyoxyalkylènes copolymères séquencés A), contenant de l'oxyde de styrène, correspondent à la formule générale I :
R¹O(SO)ₐ(EO)_{b}(PO)_{c}(BO)_{d}R²,
dans laquelle R¹ représente un radical à chaîne droite ou ramifiée ou cycloaliphatique ayant de 8 à 13 atomes de carbone,
R² = un atome d'hydrogène, un radical acryloyle, un radical alkyle ou un reste d'acide carboxylique ayant chacun de 1 à 8 atomes de carbone,
SO = oxyde de styrène,
EO = oxyde d'éthylène,
PO = oxyde de propylène,
BO = oxyde de butylène et
a = 1 à 1,9,
b = 3 à 50,
c = 0 à 3,
d = 0 à 3
a, c ou d étant différent de 0 et b étant ≥ a+c+d.

3. Compositions selon au moins l'une des revendications précédentes, **caractérisées en ce que** les résines cétone-aldéhyde B) contiennent
I. 40 à 100 % en moles, par rapport à toutes les cétones utilisées, d'au moins une cyclohexanone substituée par alkyle, comportant un ou plusieurs radicaux alkyle ayant de 1 à 8 atomes de carbone,
II. 0,8 à 2,0 moles d'au moins un aldéhyde aliphatique, par rapport à 1 mole de toutes les cétones utilisées et
III. 0 à 60 % en moles, par rapport à toutes les cétones utilisées, d'autres cétones à radicaux hydrocarbonés aliphatiques, cycloaliphatiques, aromatiques, ces derniers pouvant être identiques ou différents et là aussi substitués dans la chaîne hydrocarbonée par les radicaux hydrocarbonés cités, ainsi qu'éventuellement de phénols et/ou d'urée ou de ses dérivés.

4. Compositions selon au moins l'une des revendications précédentes, **caractérisées en ce que** le rapport de mélange des polyoxyalkylènes copolymères séquencés A), contenant de l'oxyde de styrène, et des résines cétone-aldéhyde B) va de 95:5 à 5:95.

5. Compositions selon au moins l'une des revendications précédentes, **caractérisées en ce que** de l'eau est contenue en tant que solvant C).

6. Compositions selon au moins l'une des revendications précédentes, **caractérisées en ce qu'**un solvant organique est contenu en tant que solvant C).

7. Compositions selon au moins l'une des revendications précédentes, **caractérisées en ce qu'**en tant que solvant C) est contenu au moins un alcool, un ester, une cétone, un éther, un éther de glycol, un hydrocarbure aromatique, un hydrocarbure hydroaromatique, un hydrocarbure halogéné, un hydrocarbure terpénique, un hydrocarbure aliphatique, un alcool-ester, du diméthylformamide ou du diméthylsulfoxyde, seuls ou en mélanges.

8. Procédé pour la préparation de compositions contenant essentiellement
A) de 95 à 5 % en poids d'au moins un polyoxyalkylène copolymère séquencé, contenant de l'oxyde de styrène,
et
B) de 5 à 95 % en poids d'une résine cétone-aldéhyde,
et
C) de 0 à 80 % en poids d'au moins un solvant,
la somme des données pondérales des composants A) à C) étant égale à 100 % en poids,
par mélange des composés A), B) et C) à des températures de 20 à 100 °C, dans un récipient à agitation.
